# EUROPÄISCHE PATENTSCHRIFT

(11) **EP 2 251 175 B1**
(45) Veröffentlichungstag und Bekanntmachung des Hinweises auf die Patenterteilung: **24.06.2015**
(21) Anmeldenummer: 10005126.7
(22) Anmeldetag: 17.05.2010
(51) Int. Cl.: B29C 45/14, B29C 33/14

(54) **Verfahren und Werkzeug zur Herstellung eines Flaschenkastens aus Kunststoff**
Method and tool for producing a plastic bottle crate
Procédé et outil pour fabriquer une caisse à bouteilles en matière plastique

(30) Priorität: 16.05.2009 DE 202009007083 U
(43) Veröffentlichungstag der Anmeldung: 17.11.2010
(73) Patentinhaber: Delbrouck GmbH, 58710 Menden (DE); Genossenschaft Deutscher Brunnen e.G., 53175 Bonn (DE)
(72) Erfinder: Delbrouck, Klaus, 50825 Köln (DE); Broer, Eckhard, 58710 Menden (DE)
(74) Vertreter: Patentanwälte Dörner & Kötter PartG mbB

(56) Entgegenhaltungen:
- EP-A1- 0 013 057
- EP-A1- 1 563 978
- EP-A1- 1 563 980
- EP-A1- 1 950 025
- EP-A2- 1 110 875
- BE-A3- 1 009 580
- DE-A1- 3 626 541
- DE-A1-102005 059 976
- DE-B- 1 259 770
- DE-U1- 29 900 044
- DE-U1-202009 007 083
- FR-A- 1 271 931
- JP-A- 4 140 119
- VOLCKMANN K: "KRATZFEST AM KASTEN", PLASTVERARBEITER, HUETHIG GMBH, HEIDELBERG, DE, Bd. 49, Nr. 12, 1. Dezember 1998 (1998-12-01), Seite 58,60, XP000937185, ISSN: 0032-1338

## Beschreibung

Die Erfindung betrifft ein Verfahren und ein Werkzeug zur Herstellung eines quaderförmigen Flaschenkastens mit einem Boden, vom Boden abragenden Gefachen zur Bildung von Flascheneinstellplätzen, vorzugsweise hohlen Ecksäulen in den Ecken des Flaschenkastens sowie einem die Ecksäulen-Enden umlaufend verbindenden Stapelrand, wobei die Ecksäulen auf ihren die Außenseiten bildenden Flächen einen folienartigen Werbeträger aufweisen, der die Außenseiten überdeckt.

Flaschenkästen dieser Art sind im Stand der Technik bekannt (BE 1009580 A3).

Bei solchen Flaschenkästen wird bisher auf die Außenseiten der Ecksäulen ein zweiteiliger folienartiger Werbeträger aufgebracht, der besondere Informationen über den Kasteninhalt sowie Markenembleme und Logos des Getränkeabfüllers aufweist. In der bisherigen Gestaltung wird die Folie, die den Werbeträger bildet, im Herstellungsverfahren auf die Ecksäulen aufgeformt, wobei aufgrund der bisherigen Praxis in der Mitte der Ecksäule eine vertikale Trennnaht zwischen den beiden Folienbestandteilen entsteht. Dies ist nachteilig, weil der Gesamteindruck des Erscheinungsbildes des folienartigen Werbeträgers hierdurch gestört wird und auch unter Umständen die Erkennbarkeit der darauf befindlichen Informationen leidet. Bei der bisherigen Ausgestaltung entsteht zwischen den nebeneinander angeordneten Folienteilen eine Trennnahtfuge, die unerwünscht ist.

Zudem ist die Verwendung von tiefgezogenen Folien bekannt, die durch Umformen hergestellt werden. Bei diesen ist zwar keine Trennfuge vorhanden; ihre Herstellung ist jedoch aufwändig und damit kostenintensiv.

In "Plastverarbeiter Band 49, Jahrgang Nr. 12" (Huethig GmbH, Heidelberg) vom 1. Dezember 1998 wird in dem Artikel "Kratzfest am Kasten" (Volckmann, K.) ein Verfahren mit den Merkmalen des Oberbegriffs des Anspruchs 1 beschrieben, habst für dieses Verfahren geeigneten Werkzeugen.

Ausgehend von diesem Stand der Technik liegt der Erfindung die Aufgabe zugrunde, ein Verfahren und ein Werkzeug zur Herstellung eines Flaschenkastens zu schaffen, der hinsichtlich der Ausbildung und Anordnung des folienartigen Werbeträgers optimiert ist.

Die Aufgabe wird durch ein Verfahren und ein Werkzeug zur Herstellung eines Flaschenkastens aus Kunststoff mit den Merkmalen der Ansprüche 1 und 3 gelöst. Durch das erfindungsgemäße Werkzeug sowie das erfindungsgemäße Verfahren ist gewährleistet, dass die Werbemittel zuverlässig dem Spritzwerkzeug zugeführt und in diesem genau positioniert werden. Durch eine Teilung der Werkzeugbacken und die Verfahrbarkeit der Eckbereiche rechtwinklig zur Verfahrrichtung des Labelgreifers ist zudem ein sicherer Halt der Werbträger an den Werkzeugbacken bis zum Einspritzen des Kunststoffs gewährleistet.

Der folienartige Werbeträger wird als einstückiges Element auf die Außenseite der Ecksäule aufgebracht

Gemäß dieser Ausbildung wird auf die Außenseite der Ecksäule ein einstückiger folienartiger Werbeträger aufgebracht, der aufgrund seiner Einstückigkeit einen hervorragenden Qualitätseindruck hinterlässt und bei dem die Informationen, die auf dem Werbeträger angebracht sind, einerseits gut ersichtlich sind und andererseits der Gesamteindruck nicht durch eine Trennnahtfuge oder dergleichen gestört wird.

Bevorzugt ist dabei vorgesehen, dass jede Ecksäule eine gerundete, gegebenenfalls etwas abgeflachte Außenfläche aufweist, wobei der Werbeträger auf diese gesamte Außenfläche als einstückiges Element aufgebracht ist.

Die Ecksäule ist im Bereich der Außenfläche gerundet, wobei die Rundung abgeflacht ist, so dass diese also mit einem relativ großen Radius erzeugt ist. Dies dient der besseren Lesbarkeit des vertikal angeordneten folienartigen einstückigen Werbeträgers.

Bevorzugt kann zudem vorgesehen sein, dass die Außenfläche der Ecksäule eine Vertiefung aufweist, die den Flächenbereich zur Aufnahme des Werbeträgers bildet.

Hierdurch wird eine geschützte Anordnung des auf die Außenfläche der Ecksäule aufgebrachten folienartigen Werbeträgers erreicht, so dass dieser beim ständigen Gebrauch des Flaschenkastens nicht beschädigt oder zerstört wird.

Eine bevorzugte Ausbildung, die alternativ oder zusätzlich vorgesehen sein kann, besteht darin, dass die Außenfläche der Ecksäule, die zur Aufnahme des Werbeträgers bestimmt ist, umlaufend eine angeformte Randkante aufweist, hinter welcher der aufgebrachte Werbeträger zurückliegend angeordnet ist.

Durch diese Ausbildung wird ebenfalls eine Sicherung gegen Beschädigung in dem Bereich vorgesehen, in welchem der folienartige Werbeträger aufgebracht ist, da durch die umlaufende vorragende Randkante in Form einer dünnen Leiste oder dergleichen ein Schutz gegen mechanische Beschädigungen gewährleistet ist. Zugleich dient die Randkante der Kastenführung in der Abfüllanlage.

Des Weiteren ist bevorzugt vorgesehen, dass die Außenfläche der Ecksäule einen ersten Bereich aufweist, an den ein gerundeter oder flach gerundeter zweiter Bereich anschließt, der die Kastenecke bildet, und an den ein dritter Bereich anschließt.

Durch diese Ausbildung ist erreicht, dass der folienartige Werbeträger infolge der Ausbildung der Außenfläche der Ecksäule in seinen Endbereichen, die den Kastenseitenwänden benachbart sind, quasi bündig in die Seitenflächen übergeht und im äußersten Eckbereich, der flach gerundet ist, gut ersichtlich ist.

Um noch eine bevorzugte größere Anordnung des folienartigen Werbeträgers zu erreichen, kann vorgesehen sein, dass der erste Bereich und/oder der dritte Bereich eine vergrößerte Fläche aufweist, die in Richtung einer benachbarten Ecksäule vorragt, wobei der Werbeträger einstückig auch die Fläche überdeckt, die gegebenenfalls vertieft ist oder randseitig die umlaufende Randkante aufweist.

Hierdurch ist sichergestellt, dass der folienartige Werbeträger nicht nur im Bereich der vertikal gerichteten Ecksäule vorgesehen ist, sondern auch in einem sich benachbart zur Ecksäule erstreckenden Bereich, der in die jeweilige Seitenfläche übergeht. Der folienartige Werbeträger erstreckt sich folglich ohne Unterbrechung um die Ecksäule in die angrenzende Kastenseite. Hierdurch ist eine größere Fläche zur Darstellung der entsprechenden Werbesymbole erreicht, wobei durch die entsprechende Ausbildung eine gute Inaugenscheinnahme von der Kastenseite gewährleistet ist, auch wenn der Kasten sich beispielsweise im Stapelverbund mit mehreren anderen Kästen befindet.

In Ergänzung kann zudem vorgesehen sein, dass ein umlaufender Bodenrand und/oder der umlaufende Stapelrand außenseitig einen bis zu den benachbarten Ecksäulen reichenden Bereich aufweist, der mit einer Folie gegebenenfalls einer Werbeträgerfolie abgedeckt ist.

Zudem können zwei Ecksäulen sowie die dazwischen befindlichen Bereiche mit einer Folie nahtfrei abgedeckt sein.

Hierdurch können auch der umlaufende Bodenrand und/oder der umlaufende Stapelrand außenseitig in geeigneter Weise mit einer Folie abgekleidet sein, so dass ein bevorzugtes Erscheinungsbild des Gesamtkastens erreicht wird.

Auch hierbei kann vorgesehen sein, dass der Bereich des Bodenrandes und/oder der Bereich des Stapelrandes, der die Folie oder Werbeträgerfolie trägt, vertieft ist oder von einem umlaufenden vorragenden Steg umgeben ist.

Eine Besonderheit besteht noch darin, dass der Flaschenkasten aus Kunststoff-Recyclat geformt ist, wobei auf die von außen sichtbaren Flächen der Ecksäulen und/oder des Bodenrandes und/oder des Stapelrandes eine hochwertige Kunststofffolie aufgeformt ist.

Die besondere Ausbildung und Anordnung der Kunststofffolie und/oder des folienartigen Werbeträgers ermöglicht es, den Flaschenkasten aus kostengünstigem Recyclat zu formen, wobei die für die Werbung wesentlichen Informationen und Farboptik durch die Folie aufgebracht wird, die also eine individuelle Gestaltung des aus Recyclat gefertigten Flascheneinheitskastens ermöglicht. Das Aufbringen der Folie bzw. Kunststofffolie erfolgt vorzugsweise im so genannten Inmouldverfahren, was eine besonders kostengünstige Fertigung des Flaschenkastens ermöglicht.

Ausführungsbeispiele der Erfindung sind in der Zeichnung dargestellt und im Folgenden näher beschrieben.

Es zeigt:
- Fig. 1: eine erste Ausführungsform eines Flaschenkastens in Ansicht;
- Fig. 2: eine zweite Ausführungsform, ebenfalls in Ansicht;
- Fig. 3: die Ausführungsform nach Fig. 1, im Querschnitt gesehen;
- Fig. 4: eine dritte Ausführungsform, ebenfalls in Ansicht;
- Fig. 5: die ausschnittsweise Darstellung des Eckbereichs der Ausführungsform nach Fig. 4, im Querschnitt gesehen;
- Fig. 6: die schematische Gesamtdarstellung des Werkzeugs zur Herstellung des Flaschenkastens;

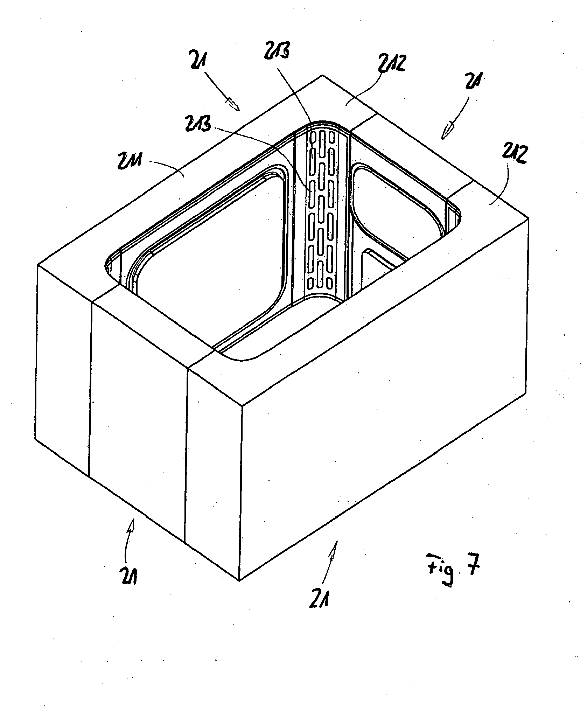

- Fig. 7: die schematische, perspektivische Darstellung der Werkzeugbacken in verriegeltem Zustand am Beispiel zweier nahtloser Folien um jeweils zwei Eckbereiche;

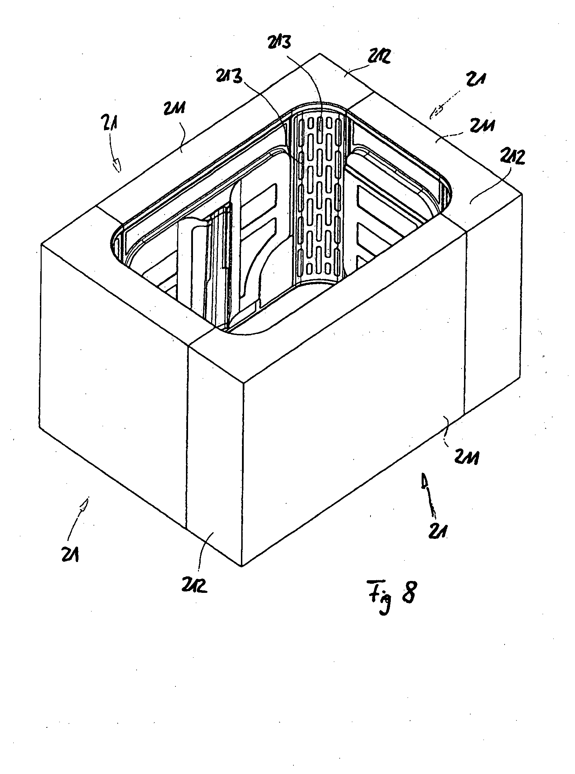

- Fig. 8: die schematische, perspektivische Darstellung der Werkzeugbacken in verriegeltem Zustand in anderer Ausbildung am Beispiel von vier Bakken mit Viertelkreisanhang;
- Fig. 9 a): die perspektivische Darstellung einer Werkzeugbacke nach Fig. 8;

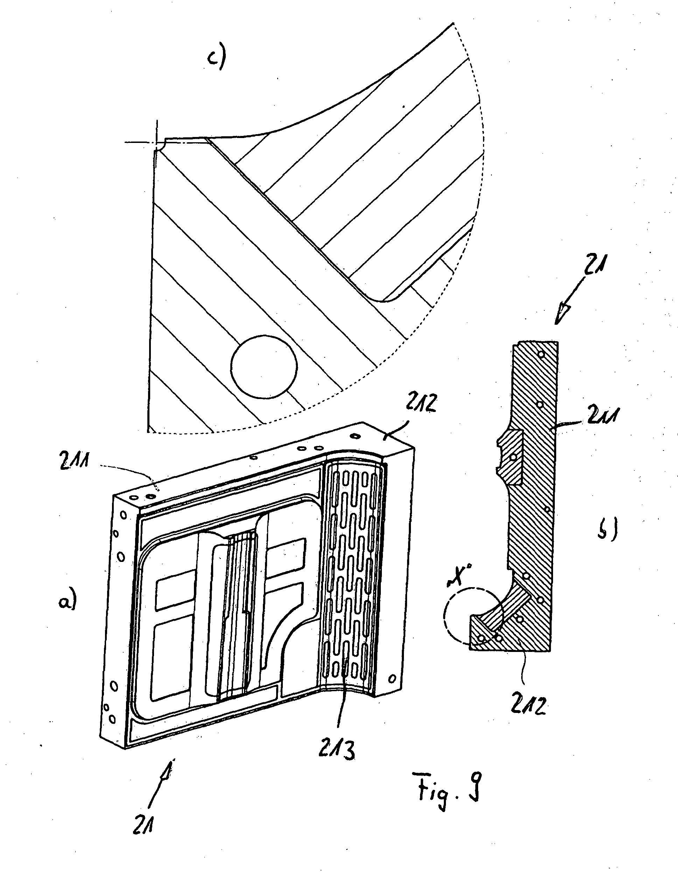

- Fig. 9 b): den Schnitt durch die Werkzeugbacke nach Fig. 9 a);
- Fig. 9 c): die Einzelheit "X" in Fig. 9 b) in vergrößertem Maßstab;

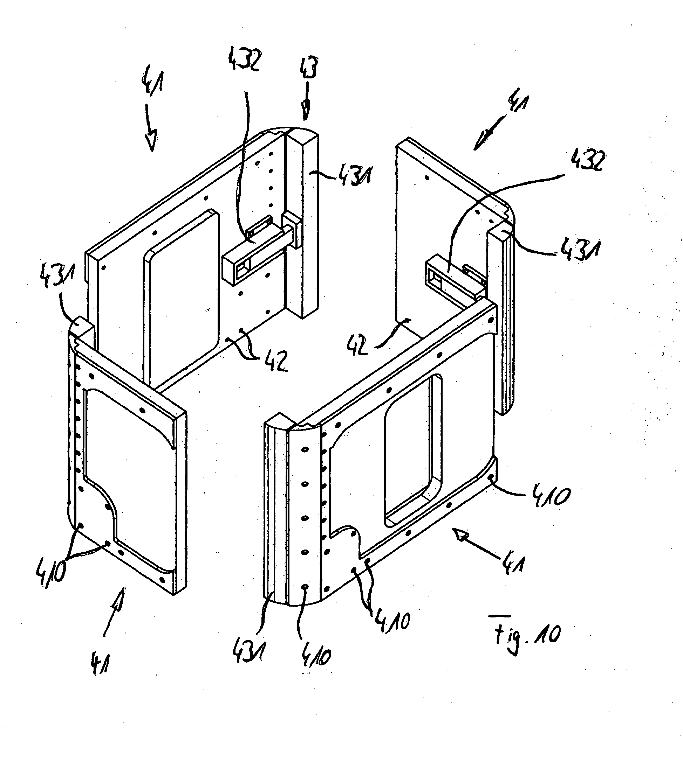

- Fig. 10: die perspektivische Darstellung von vier Einlegeelementen;

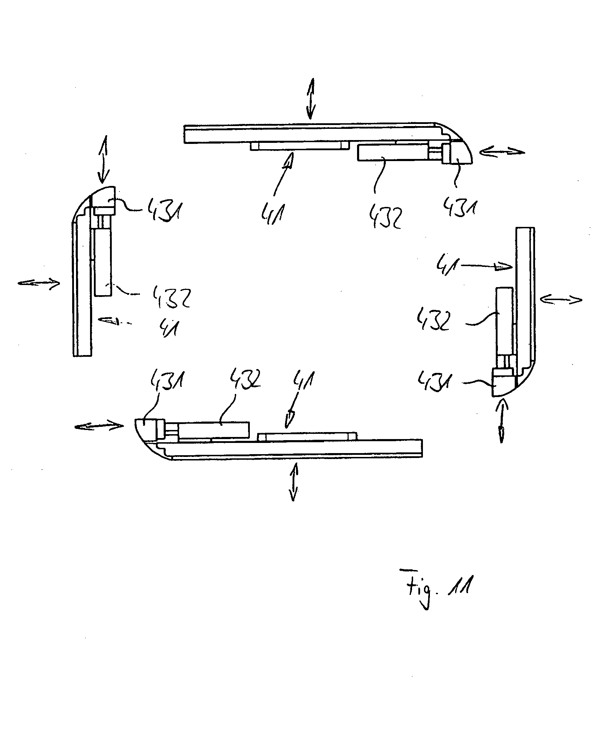

- Fig. 11: die Draufsicht auf die in Fig. 10 dargestellten Einlegeelemente;

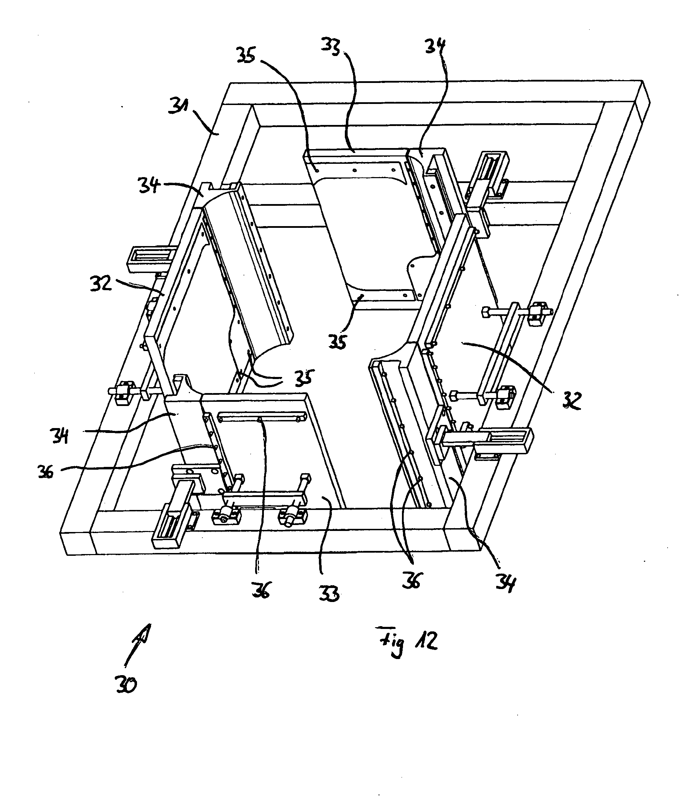

- Fig. 12: die perspektivische Darstellung des Labelübersetzers;

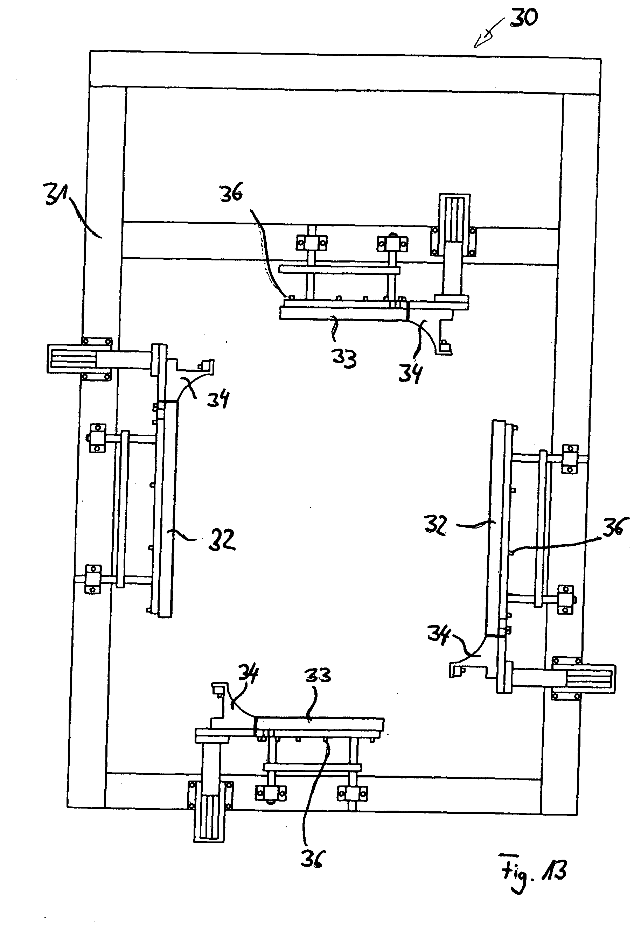

- Fig. 13: die Draufsicht auf den in Fig. 12 dargestellten Labelübersetzer;

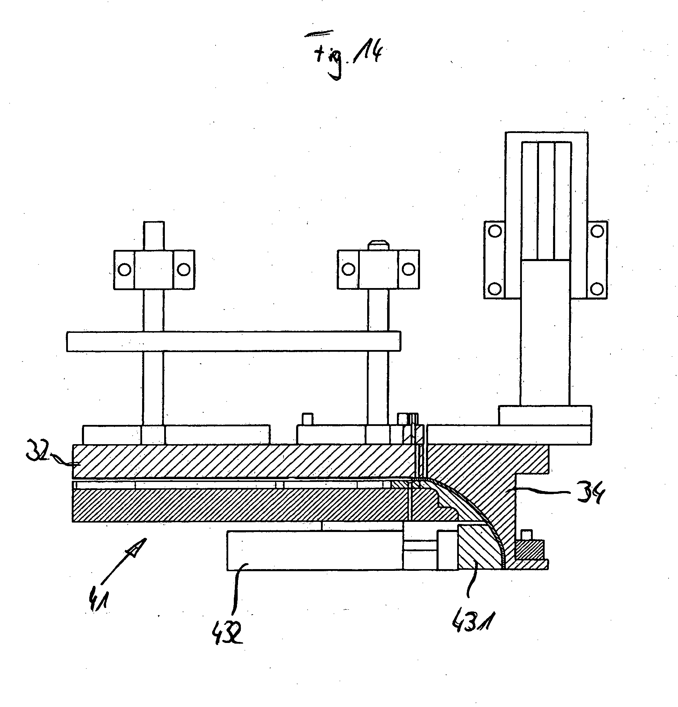

- Fig. 14: die abschnittsweise Darstellung eines Schnitts durch ein Einlegeelement und ein Segment des Labelübersetzers.

In der Zeichnung ist ein quaderförmiger Flaschenkasten gezeigt, der einen Boden 1 mit vom Boden abragenden Gefachwandungen 2 zur Bildung von Flascheneinstellplätzen aufweist. In den Eckbereichen weist der Flaschenkasten hohle Ecksäulen 3 auf. Die Ecksäulen sind an ihren freien Enden durch einen umlaufenden Stapelrand 4 verbunden. Zur Identifizierung des Abfüllers bzw. des Inhaltes des Flaschenkastens sind insbesondere auf den Außenseiten der Ecksäulen folienartige Werbeträger 5 als einstückiges Element jeweils aufgebracht. Wie insbesondere aus der Schnittdarstellung gemäß ersichtlich, weist jede Ecksäule eine gerundete, im Mittelbereich etwas abgeflachte Außenfläche auf, wobei der Werbeträger 5 mit dem erfindungsgemäßen Verfahren auf diese Außenfläche als jeweils einstückiges Element aufgebracht ist, so dass im Bereich jeder Ecksäule keine Trennfuge oder sonstige Unterbrechung des folienartigen Werbeträgers vorhanden ist.

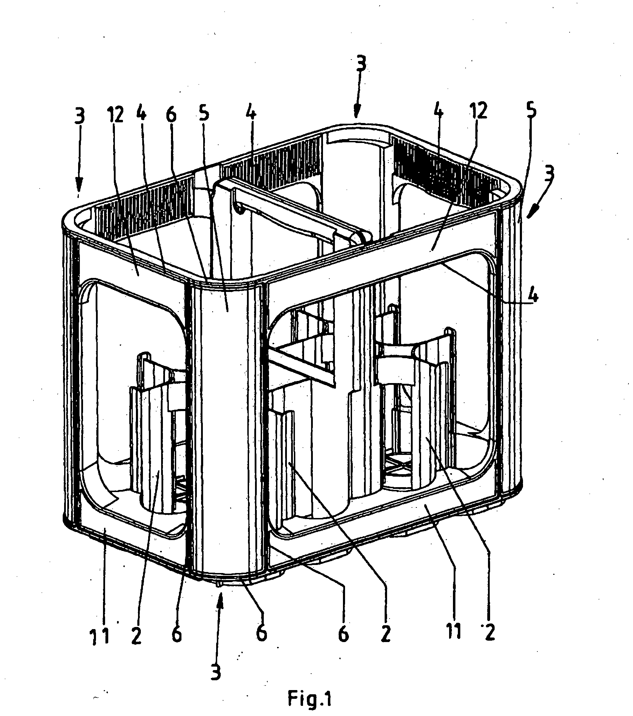

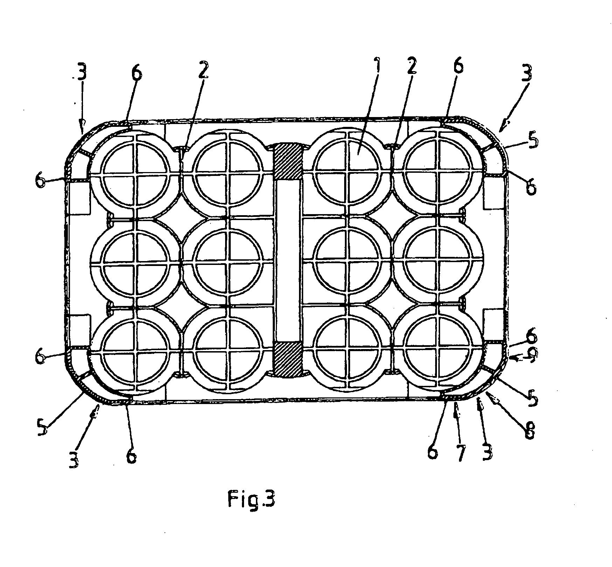

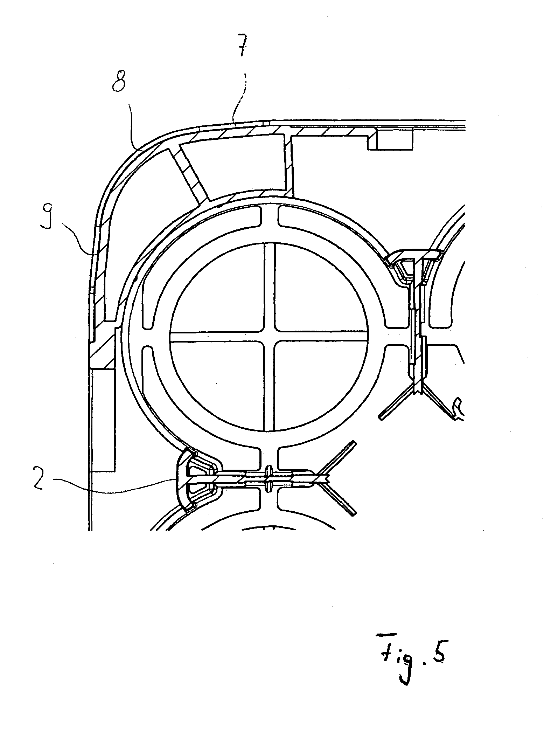

Vorzugsweise weist die Außenfläche der Ecksäule 3, die zur Aufnahme des Werbeträgers 5 bestimmt ist, umlaufend eine angeformte Randkante 6 auf, die insbesondere in Fig. 1, verdeutlicht ist, so dass der Werbeträger 5 hinter dieser Randkante 6 zurückliegend angeordnet ist und somit gegen mechanische Beschädigungen weitestgehend geschützt ist. Wie insbesondere aus der Schnittdarstellung gemäß Fig. 3 ersichtlich, weist die Außenfläche der Ecksäule 3 einen ersten Bereich 7 auf, an den ein gerundeter oder flach gerundeter zweiter Bereich 8 anschließt, der die Kastenecke bildet und an den ein dritter Bereich 9 angeschlossen ist. Der erste Bereich 7 oder der dritte Bereich 9 kann jeweils parallel zur längeren bzw. kürzeren Kastenseite ausgerichtet sein. Um eine bessere Entformung zu ermöglichen und insbesondere ein Verkratzen des aufgebrachten Werbeträgers beim Entformen zu verhindern, können die Bereiche 7 und/oder 9 nicht parallel zu den Kastenseiten ausgerichtet sein, wie dies in Fig. 5 dargestellt ist. Im Ausführungsbeispiel weisen die Bereiche 7 und 9 einen Winkel von 5° zur jeweils anschließenden Kastenseite auf und bilden dadurch einen Konus aus.

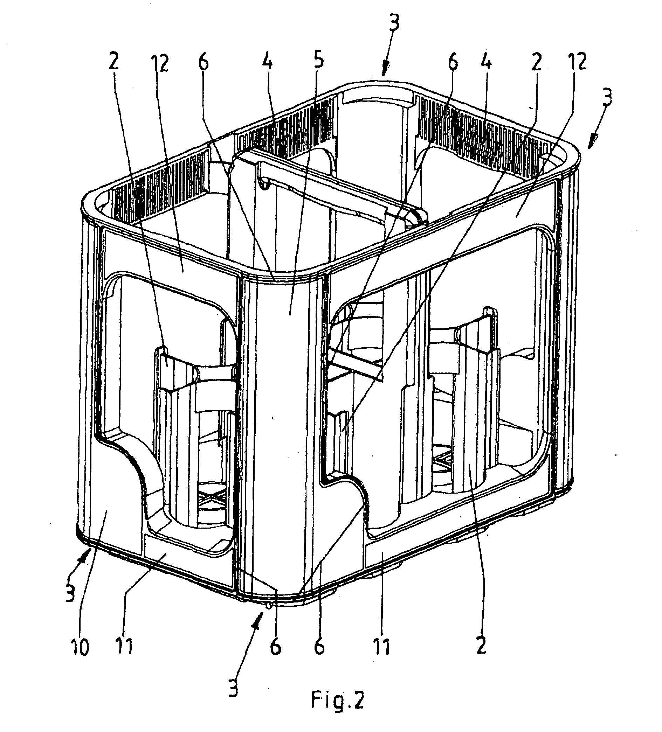

Bei der Ausführungsform nach Fig. 2 weist der erste Bereich 7 oder der dritte Bereich 9 bodennah eine vergrößerte Fläche 10 auf, die in Richtung einer benachbarten Ecksäule 3 vorragt, wobei der Werbeträger 5 auch diese Fläche 10 überdeckt und einstückig ausgebildet ist. Dabei kann die Fläche 10 ebenfalls vertieft oder durch eine umlaufende Randkante 6 geschützt sein.

In zusätzlicher Gestaltung kann auch ein umlaufender Bodenrand oder der umlaufende Stapelrand außenseitig einen bis zu den benachbarten Ecksäulen 3 reichenden Bereich aufweisen, der ebenfalls mit einer Folie 11, 12 abgedeckt ist, die farbig gestaltet sein kann oder als Werbeträgerfolie ausgebildet sein kann.

Auch hierbei kann der Bereich, der jeweils die Folie bzw. Werbeträgerfolie 11 bzw. 12 trägt, vertieft oder von einem umlaufenden vorragenden Steg umgeben sein, um die Folie gegen mechanische Schäden zu schützen.

Der Flaschenkasten besteht aus Kunststoff, vorzugsweise Kunststoff-Recyclat, wodurch eine kostengünstige Fertigung eines Einheitskastens möglich ist. Die Individualisierung des Kastens erfolgt dann dadurch, dass entsprechende Werbeträgerfolien oder Kunststofffolien in den Bereichen 5, 11, 12 aufgebracht werden, um dem Kasten ein eigenständiges Design zu vermitteln.

Das Werkzeug zur Herstellung des Flaschenkastens aus Kunststoff umfasst einen beweglichen Werkzeugstempel 20, der an dem verfahrbaren Teil 50 der Spritzmaschine angeordnet ist und der von Werkzeugbacken 21 im geschlossen Zustand umgeben ist. Es ist ein Roboter 15 zur Handhabung der Werbeträgerfolie 5, 11,12 und der Flaschenkästen im Bereich der Spritzmaschine vorgesehen. Zur Aufnahme der gestapelten Werbeträger (Label) weist das Werkzeug ein - nicht dargestelltes - Aufnahmegerät auf. Zur Zwischenhaltung der Werbeträger ist zudem ein Labelübersetzer 30 vorgesehen. An dem Roboter 15 ist ein Labeleinleger 40 angeordnet, der Einlegeelemente 41 aufweist.

Der Werkzeugstempel 20 bildet die Innenkontur des Flaschenkastens sowie die Innenseiten der Ecksäulen 3, des Stapelrandes 4 und des bodennahen Randes nach. Der Werkzeugstempel 20 ist zu den Werkzeugbacken 21 horizontal verfahrbar an dem verfahrbaren Teil 50 der Spritzmaschine angeordnet.

Das Werkzeug ist geteilt ausgeführt, weshalb vier Werkzeugbacken 21 vorgesehen sind. Die Werkzeugbacken 21 bestehen jeweils aus einem sich der Länge nach erstreckenden Bereich 211, mit dem die Bereiche 11 des Bodenrandes und die Bereiche 12 des Stapelrandes 4 hergestellt werden, sowie aus einem Eckbereich 212, mit dem bei der Herstellung des Flaschenkastens die Ecksäulen 3 ausgebildet werden. In den Werkzeugbacken 21 sind Vakuumschlitze 213 vorgesehen, die mit - nicht dargestellten - Vakuumleitungen verbunden sind. Die Vakuumschlitze 213 haben insbesondere in den Eckbereichen 212 vorzugsweise jeweils die Form eines Langlochs, wie dies insbesondere Figur 9 zu entnehmen ist.

Der Labelübersetzer 30 ist mehrteilig ausgebildet. Er weist einen Rahmen 31 auf, an dem acht Segmente 32, 33 und 34 angeordnet sind, die im Wesentlichen die Außenkontur des Flaschenkastens nachbilden. Die Segmente 32 bilden dabei jeweils die Längsseiten, die Segmente 33 die Querseiten und die Segmente 34 jeweils die Eckbereiche des Flaschenkastens nach. Die Segmente 34 sind verfahrbar an dem Rahmen 31 angeordnet. Sie dienen dazu, die Werbeträgerfolie in den Eckbereichen zu runden. Die Segmente 32, 33 und 34 sind mit Ansaugöffnungen 35 ausgestattet, die gleichmäßig in dem Bereich über die Segmente 32, 33 und 34 verteilt vorgesehen sind, mit denen die Label zur Anlage kommen. Die Ansaugöffnungen 35 sind rückwärtig mit Anschlüssen 36 versehen, an die - nicht dargestellte - Vakuumleitungen angeschlossen sind.

Die Einlegeelemente 41 bilden im Wesentlichen die Außenkontur des Flaschenkastens nach. Über die Einlegeelemente 41 verteilt sind Saugelemente 410 angeordnet, die auf ihrer Rückseite mit Anschlüssen 42 für Unterdruckleitungen versehen sind. Die Einlegeelemente 41 weisen abgerundete Bereiche 43 auf, die die Außenkontur der Ecksäulen 3 des Flaschenkastens nachbilden. Im Ausführungsbeispiel sind die abgerundeten Bereiche zweiteilig ausgeführt, so dass ein Druckstück 431 ausgebildet ist. Das Druckstück 431 ist rechtwinklig zur Verfahrrichtung des jeweiligen Einlegeelements 41 bewegbar. Hierzu ist auf der Rückseite des jeweiligen Saugelements 41 ein druckluftbetriebener Stellmotor 432 angeordnet. Das Druckstück 431 wird Einlegen der Werbemittel in die Werkzeugbacken 21 bewegt.

Bei dem Verfahren zur Herstellung des Flaschenkastens werden zunächst die folienartigen Werbeträger von-einem - nicht dargestellten - Aufnahmegerät aus einem Magazin abgehoben und mittels eines ersten Roboters in den Labelübersetzer 30 eingeführt. In dem Labelübersetzer 30 wird von dem Aufnahmegerät eine Spreizbewegung zur Übergabe der Werbeträger an die Segmente 32 und 33 des Labelübersetzers 30 ausgeführt. Unter dem Einfluss der durch die Ansaugöffnungen 35 angesaugten Luft werden die Label an den Segmenten 32 und 33 gehalten. Nach der Übergabe der Werbeträger an den Labelübersetzer 30 wird das Aufnahmegerät aus dem Labelübersetzer 30 herausgefahren.

Nachdem sich die Label an dem Labelübersetzer 30 befinden, fährt der Labeleinleger 40 in den Labelübersetzer 30 bis er zwischen den Segmenten 32, 33 und 34 positioniert ist. Der Labeleinleger 40 führt dann eine Spreizbewegung aus, die zur Anlage der Einlegeelemente 41 des Labeleinlegers 40 an die Segmente 32, 33 und 34 führt. Gleichzeitig werden die Segmente 34 aus ihrer zurückgezogenen Position in Richtung der Werbemittel verfahren. Sobald die Werbemittel mit den Segmenten 34 in Kontakt treten wird die Krümmung der Segmente 34 von der Folie nachgebildet, wodurch eine Krümmung der Folie bewirkt wird. Beim weiteren Vorfahren der Segmente 34 schmiegt sich die Folie an den abgerundeten Bereich 43 der Labeleinleger 40 an, sodass die Folie um diesen gelegt wird und die Krümmung des abgerundeten Bereichs 43 vollständig nachgebildet wird. In dieser Position wird die Vakuumpumpe, die das Ansaugen der Label auf die Segmente 32, 33 und 34 bewirkt, abgestellt. Gleichzeitig wird die Vakuumpumpe des Labeleinlegers 40 in Betrieb gesetzt, so dass die Werbeträger von dem Labelübersetzer 30 freigegeben und von den in dem Labeleinleger 40 vorgesehenen Saugelementen 410 angesaugt werden.

Die Werbeträger werden dann mit Hilfe des zweiten Roboters 15 und des Labeleinlegers 40 in das Spritzwerkzeug transportiert. Dabei wird der Labeleinleger 40 horizontal in den Bereich zwischen die Werkzeugbacken 21 bewegt. Hat der Labelgreifer 40 seine endgültige Position erreicht, ist er in einem gewissen Abstand von den Werkzeugbacken 21 umgeben. In dieser Position wird von dem Labeleinleger 40 eine Spreizbewegung ausgeführt, die zur Anlage der in dem Labeleinleger 40 befindlichen Werbeträger an die Werkzeugbacken 21 führt. In dieser Position wird die Vakuumpumpe, die das Ansaugen der Werbeträger auf den Einlegeelementen 41 bewirkt, abgestellt. Gleichzeitig wird die mit den Vakuumschlitzen 213 der Werkzeugbacken 21 versehene Vakuumpumpe in Betrieb gesetzt, so dass die Werbeträger von den Labeleinlegern 40 freigegeben und von den in den Werkzeugbacken 21 vorgesehen Vakuumschlitzen 213 angesaugt werden. In dieser Position werden die Druckstücke 431 des abgerundeten Bereichs 43 der Einlegeelemente 41 rechtwinklig zur Verfahrrichtung des Labeleinlegers 40 in die Ecken der Werkzeugbacken 21 gerichtet verfahren. Diese Verfahrbewegung bewirkt ein Andrücken der Werbeträger in die die Ecksäulen 3 bildenden Bereiche, die im Wesentlichen rechtwinklig zur Verfahrrichtung des jeweiligen Labeleinlegers 40 liegt. Auf diese Weise ist gewährleistet, dass die folienartigen Werbeträger über die gesamte Breite der die Ecksäulen 3 nachbildenden Ecken der Werkzeugbacken 21 anliegen. Nach Andrücken der Folien fahren die Druckstücke 431 wieder in ihre Ausgangsposition zurück. Die Werbeträger stehen dann unter dem Einfluss der Vakuumschlitze 213 und sind somit zuverlässig an den Werkzeugbacken 21 gehalten. Sobald die Druckstücke 431 ihre Ausgangsposition erreicht haben, wird die Spreizung des Roboters Labeleinleger 40 aufgehoben. Der Labeleinleger 40 wird im Anschluss von dem Roboter 15 aus dem Spritzwerkzeug herausgefahren.

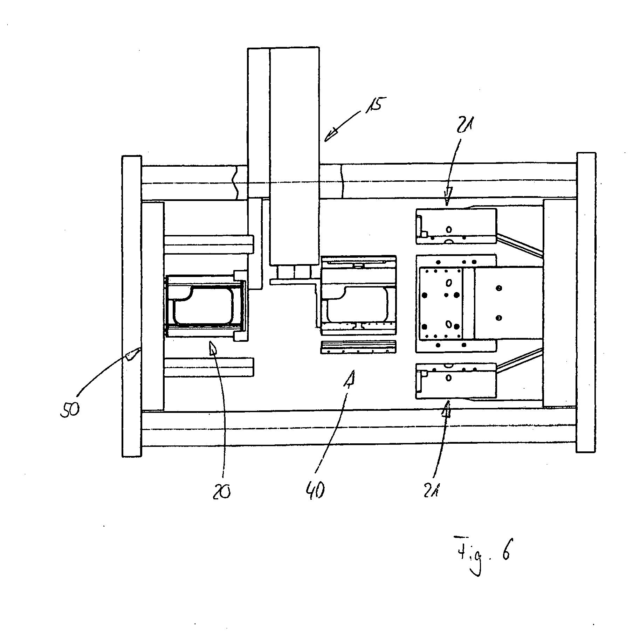

Von dem verfahrbaren Teil 50 der Spritzmaschine wird dann der Werkzeugstempel 20 in das Spritzwerkzeug verfahren. Gleichzeitig werden die Werkzeugbakken 21 in Richtung des Werkzeugsstempels 20 verfahren. Sobald der-Werkzeugstempel 20 seine Endposition erreicht hat, haben auch die Werkzeugbacken 21 ihren maximalen Verfahrweg zurückgelegt. Das Werkzeug wird dann verriegelt. Sodann wird der flüssige Kunststoff in die zwischen den Werkzeugbacken 21 und dem Werkzeugstempel 20 gebildeten Kavitäten eingespritzt. Während der Erstarrung des Kunststoffs wird die von den Saugern 213 ausgeübte Saugkraft abgestellt, sodass die Werbeträger mit dem Kasten auf der dem Kasten zugewandten Seite verschmelzen. Zur Verbesserung des Schmelzvorgangs können die Werbeträger auf ihrer dem Kasten zugewandten Seite beschichtet sein. Nach der vollständigen Erstarrung des Kunststoffs in den Kavitäten werden die Werkzeugbacken 21 nach außen verfahren. Der dann fertiggestellte Flaschenkasten ist bereits mit den folienartigen Werbeträgern auf dem Werkzeugstempel 20 angeordnet. Der Werkzeugstempel 20 wird daraufhin mit dem Flaschenkasten von dem-verfahrbaren Teil 50 aus dem Spritzwerkzeug herausgefahren. Sobald der verfahrbare Teil 50 seine Ausgangsposition erreicht hat, wird der Flaschenkasten von dem Roboter 15 von dem Stempel 20 entnommen und gleichzeitig neue Werbeträger in das Spritzwerkzeug transportiert. Die Position unmittelbar vor Einfahren des Labeleinlegers 40 in das Werkzeug und gleichzeitige Entnahme des Flaschenkastens durch den Roboter 15 ist in Figur 6 dargestellt.

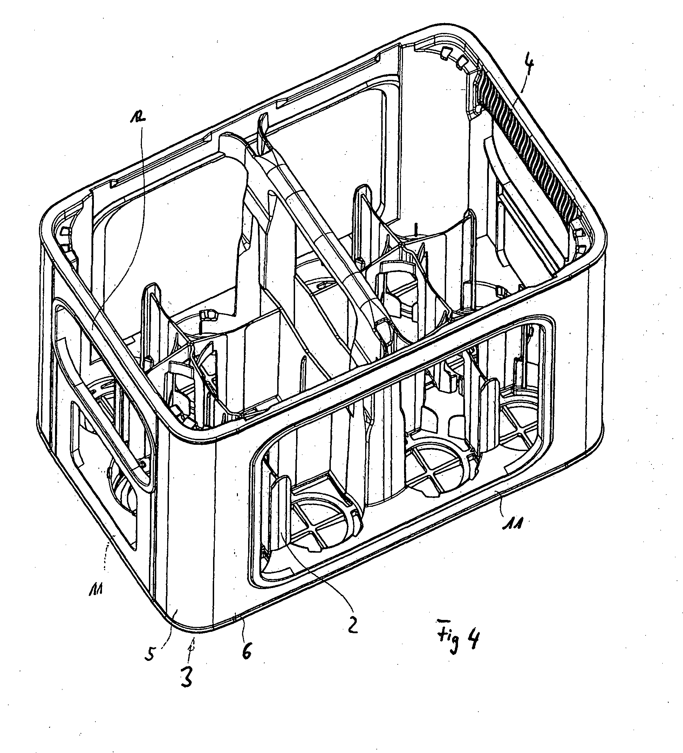

Mit dem erfindungsgemäßen Werkzeug sowie dem erfindungsgemäßen Verfahren zur Herstellung von Flaschenkästen ist ein außerordentlich zuverlässiges Anbringen folienartiger Werbeträger auf den Flaschenkasten möglich. Dabei ist insbesondere bemerkenswert, dass die Teilung des Werkzeugs nicht im Bereich der Ecken des Flaschenkastens, sondern an den Längs- und / oder Querseiten erfolgt. Dies ermöglicht, dass auf den Ecksäulen des Flaschenkastens nicht unterbrochene Werbemittel angebracht werden können. Durch die konstruktive Ausgestaltung ist es zudem möglich, die Werbemittel sowohl auf den Außenseiten der Ecksäulen als auch daran anschließenden vergrößerten Flächen, wie sie beispielsweise an dem Flaschenkasten nach den Figuren 2 oder 4 dargestellt sind, anzubringen. Aufgrund der Verwendung der Druckstücke 431 ist zudem die Handhabung der Werbemittel wesentlich verbessert, da gewährleistet ist, dass das von den Einlegeelementen 41 im Eckbereich zu übergebende Werbemittel zuverlässig in den Eckbereich der jeweiligen Werkzeugbacke 21 gehalten werden kann. Durch die Ausrichtung der Bewegung der Druckstücke 431 rechtwinklig zum Verfahrweg des Labeleinlegers 40 ist gewährleistet, dass die Werbemittel auch in dem im Wesentlichen rechtwinklig zur Verfahrrichtung des Labeleinlegers 40 angeordneten Bereich ein Druck auf das Werbemittel in Richtung der Werkzeugbacken 21 ausgeübt wird. Die Positionierung der Werbemittel wird zudem durch die Vakuumschlitze 213, die insbesondere im Eckbereich der Werkzeugbacken 21 als Langlöcher ausgebildet sind, unterstützt. Hierdurch ist die Handhabung der Werbemittel bei der Herstellung des erfindungsgemäßen Flaschenkastens wesentlich verbessert.

Die Erfindung ist nicht auf das Ausführungsbeispiel beschränkt, sondern im Rahmen der Offenbarung vielfach variabel.

## Patentansprüche

1. Verfahren zur Herstellung eines Flaschenkastens aus Kunststoff in einem Spritzwerkzeug, bei dem
- ein Werkzeugstempel (20) von einem verfahrbaren Teil (50) in das Spritzwerkzeug verfahren wird,
- gestapelte folienartige Werbeträger von einem Aufnahmegerät abgehoben und mittels eines ersten Roboters in einen Labelübersetzer (30) eingerührt werden,
- in dem Labelübersetzer (30) von dem Aufnahmegerät eine Spreizbewegung zur Übergabe der Werbeträger an Segmente (32, 33) des Labelübersetzers (30) ausgeführt wird,
- das Aufnahmegerät nach der Übergabe der Werbeträger aus dem Labelübersetzer (30) herausgefahren wird,
- ein an einem zweiten Roboter (15) angeordneter Labeleinleger (40) zwischen die Segmente des Labelübersetzers (30) verfahren wird,
- in dem Labelübersetzer (30) von dem Labeleinleger (40) eine Spreizbewegung zur Anlage von an dem Labeleinleger (40) angeordneten Einlegeelementen (41) an Segmente (32, 33, 34) des Labelübersetzers (30) ausgeführt wird,
- die Werbeträger von den Segmenten (32, 33, 34) freigegeben und von den Einlegeelementen (41) angesaugt werden,
- der Labeleinleger (40) mit den Werbeträgem von dem zweiten Roboter (15) in das Spritzwerkzeug verfahren wird,
- in dem Spritzwerkzeug von dem zweiten Roboter (15) eine Spreizbewegung zur Anlage der Einlegeelemente (41) an die Werkzeugbacken (21) ausgeführt wird,
- die Werkzeugbacken (21) in Richtung des Werkzeugstempels (20) verfahren werden,
- der flüssige Kunststoff in die zwischen den Werkzeugbacken (21) und dem Werkzeugstempel (20) gebildeten Kavitäten eingespritzt wird,
- die Werbeträger von den Werkzeugbacken (21) freigegeben werden,
- nach der Erstarrung des Kunststoffs die Werkzeugbacken (21) nach außen verfahren werden,
- der Werkzeugstempel (20) mit dem Flaschenkasten von dem verfahrbaren Teil (50) aus dem Spritzwerkzeug herausgefahren wird
- und der Flaschenkasten von dem zweiten Roboter (15) von dem Stempel (20) entnommen wird und gleichzeitig von dem Roboter (15) neue Werbeträger (5, 11, 12) in das Spritzwerkzeug transportiert werden,
**dadurch gekennzeichnet, dass**
- vor der Übergabe der Werbeträger aus dem Labelübersetzer (30) eine Krümmung aufweisende Segmente (34) des Labelübersetzers (30) in Richtung der Werbeträger verfahren werden und eine Krümmung der Werbeträger bewirkt wird,
- die Werbeträger nach der Anlage der Einlegeelemente (41) an die Werkzeugbacken (21) von den Einlegeelementen (41) freigegeben und von in den Werkzeugbacken (21) vorgesehenen Vakuumschlitzen (213) angesaugt werden und gleichzeitig die die Ecken des Flaschenkastens nachbildenden Einlegeelemente (41) in die Ecken der Werkzeugbacken (21) gerichtet verfahren werden, und
- anschließend die Spreizung aufgehoben und der Labeleinleger (40) mit den Einlegeelementen (41) von dem zweiten Roboter (15) aus dem Spritzwerkzeug herausgefahren wird.

2. Verfahren nach Anspruch 1, **dadurch gekennzeichnet, dass** die die Ecken des Flaschenkastens nachbildenden Einlegeelemente (41) bereichsweise in die Ecken der Werkzeugbacken (21) gerichtet verfahren werden.

3. Werkzeug zur Herstellung eines Flaschenkastens aus Kunststoff in einem Verfahren nach Anspruch 1 oder 2, umfassend einen beweglichen Werkzeugstempel (20), der von Werkzeugbacken (21) im geschlossenen Zustand umgeben ist, ein Aufnahmegerät zum Abheben von Werbeträgerfolien (5, 11, 12), einen spreizbaren Labelübersetzer (30) zur Zwischenhaltung von Werbemitteln, der Segmente (32, 33, 34) aufweist, und einen Roboter (15) zur Handhabung der Werbeträgerfolie (5, 11, 12) und Flaschenkästen, wobei an dem Roboter (15) ein Labeleinleger (40) angeordnet ist, der zwischen die Segmente des Labelübersetzers (30) verfahrbar ist und Einlegeelemente (41) aufweist, die abgerundete Bereiche (43) aufweisen, die die Außenkontur von Ecksäulen (3) des Flaschenkastens nachbilden, **dadurch gekennzeichnet, dass** die
abgerundeten Bereiche (43) rechtwinklig zur Verfahrrichtung des jeweiligen Einlegeelements (41) bewegbar sind.

4. Werkzeug nach Anspruch 3, **dadurch gekennzeichnet, dass** die abgerundeten Bereiche (43) zweiteilig ausgeführt sind, und ein Teil von einem Druckstück (431) gebildet ist, der rechtwinklig zur Verfahrrichtung des jeweiligen Einlegeelements (41) bewegbar ist.

5. Werkzeug nach Anspruch 3 oder 4, **dadurch gekennzeichnet, dass** die Segmente (34) verfahrbar sind.

## Claims

1. Method for producing a plastic bottle crate in an injection moulding tool, where
- a tool punch (20) is moved into the injection moulding tool by a movable part (50),
- stacked film-like advertising media are taken off by a lifting device and are inserted into a label transfer device (30) by a first robot,
- in the label transfer device (30) a spreading movement is effected by the lifting device in order to transfer the advertising media to segments (32, 33) of the label transfer device (30),
- the lifting device is moved out of the label transfer device (30) after transferral of the advertising media,
- a label inserter (40) arranged at a second robot (15) is moved between the segments of the label transfer device (30),
- a spreading movement is effected by the label inserter (40) in the label transfer device (30) in order to apply insert elements (41) arranged at the label inserter (40) to segments (32, 33, 34) of the label transfer device (30),
- the advertising media are released from the segments (32, 33, 34) and are sucked in by the insert elements (41),
- the label inserter (40) with the advertising media is moved by a second robot (15) into the injection moulding tool,
- in the injection moulding tool a spreading movement is effected by the second robot (15) in order to apply the insert elements (41) to the tool jaws (21),
- the tool jaws (21) are moved in the direction of the tool punch (20),
- the liquid plastic is injected into the cavities formed between the tool jaws (21) and the tool punch (20),
- the advertising media are released from the tool jaws (21),
- after solidification of the plastic, the tool jaws (21) are moved outside,
- the tool punch (20) with the bottle crate is moved out of the injection moulding tool by the movable part (50),
- and the bottle crate is taken off the punch (20) by the second robot (15) and simultaneously, new advertising media (5, 11, 12) are transported by the robot (15) into the injection moulding tool, **characterised in that**
- before transferral of the advertising media from the label transfer device (30) segments (34) of the label transfer device (30) having a curvature are moved in the direction of the advertising media and a curvature of the advertising media is effected,
- the advertising media are released from the insert elements (41) after application of the insert elements (41) to the tool jaws (21) and are sucked in by the vacuum grooves (213) provided in the tool jaws (21) and simultaneously the insert elements (41) replicating the edges of the bottle crate are moved to the edges of the tool jaws (21), and
- subsequently the spreading is lifted and the label inserter (40) with the insert elements (41) is moved from the injection moulding tool by the second robot (15).

2. Method according to claim 1, **characterised in that** the insert elements (41) replicating the edges of the bottle crate are moved in the direction of the edges of the tool jaws (21) area by area.

3. Tool for producing a plastic bottle crate with a method according to claim 1 or claim 2 comprising a movable tool punch (20), which is surrounded by tool jaws (21) in a closed state, a lifting device for lifting advertising media film (5, 11, 12), a spreadable label transfer device (30) for intermediate holding of advertising media, having segments (32, 33, 34) and a robot (15) for handling the advertising media film (5, 11, 12) and bottle crates, wherein a label inserter (40) is arranged at the robot (15), which is movable between the segments of the label transfer device (30) and has insert elements (41) having rounded areas (43) replicating the outer contour of corner posts (3) of the bottle crate, **characterised in that** the rounded areas (43) are movable rectangularly to the direction of movement of the respective insert element (41).

4. Tool according to claim 3 **characterised in that** the rounded areas (43) are of two-part design and a part of a pressure piece (431) is formed, which is movable orthogonally to the direction of movement of the respective inlay element (41).

5. Tool according to claim 3 or 4 **characterised in that** the segments (34) are movable.

## Revendications

1. Procédé et outil pour fabriquer une caisse à bouteilles en matière plastique dans un outil d'injection, dans lesquels
- un piston d'outil (20) est amené par une pièce déplaçable (50) dans l'outil d'injection,
- des supports publicitaires empilés en forme de feuilles sont soulevés par un appareil réceptacle et introduits par un premier robot dans un dispositif de transfert (30),
- un mouvement d'expansion est exécuté par l'appareil réceptacle dans le dispositif de transfert (30) afin de remettre les supports publicitaires à des segments (32, 33) du dispositif de transfert (30),
- l'appareil réceptacle est ramené hors du dispositif de transfert (30) après avoir remis les supports publicitaires,
- un dispositif introducteur (40) agencé contre un second robot (15) est déplacé entre les segments du dispositif de transfert (30),
- le dispositif introducteur (40) exécute dans le dispositif de transfert (30) un mouvement d'expansion pour faire appliquer les éléments d'insertion (41), agencés contre le dispositif introducteur (40), contre des segments (32, 33, 34) du dispositif de transfert (30),
- les supports publicitaires sont libérés par les segments (32, 33, 34) et aspirés par les éléments d'insertion (41),
- le second robot (15) déplace le dispositif introducteur (40) avec les supports publicitaires jusque dans l'outil d'injection,
- dans l'outil d'injection, le deuxième robot (15) exécute un mouvement d'expansion pour que les éléments d'insertion (41) viennent appliquer contre les mâchoires (21) d'outil,
- les mâchoires (21) d'outil sont déplacées en direction du piston (20) d'outil,
- le plastique liquide est injecté dans les cavités formées entre les mâchoires (21) d'outil et le piston (20) d'outil,
- les supports publicitaires sont libérés par les mâchoires (21) d'outil,
- après le durcissement de la matière plastique, les mâchoires (21) d'outil sont déplacées vers l'extérieur,
- le piston (20) d'outil et la caisse à bouteilles sont extraits de l'outil d'injection par la pièce déplaçable (50)
- et la caisse à bouteilles est retirée du piston (20) par le deuxième robot (15) et simultanément de nouveaux supports publicitaires (5, 11, 12) sont transportés par le robot (15) jusque dans l'outil d'injection,
**caractérisé en ce que**
- avant la remise des supports publicitaires hors du dispositif de transfert (30), des segments (34) incurvés du dispositif de transfert (30) sont déplacés en direction des supports publicitaires et qu'est générée une incurvation des supports publicitaires,
- après que les éléments d'insertion (41) ont appliqué contre les mâchoires (21) d'outil, les supports publicitaires sont libérés par les éléments d'insertion (41) et sont aspirés par des ouïes d'aspiration (213) prévues dans les mâchoires (21) d'outil, et que simultanément les éléments d'insertion (41) reproduisant les angles de la caisse à bouteilles sont déplacés dressés dans les angles des mâchoires (21) d'outil, et
- qu'ensuite l'expansion est supprimée et que le deuxième robot (15) sort de l'outil d'injection l'introducteur (40) avec les éléments d'insertion (41).

2. Procédé selon la revendication 1, **caractérisé en ce que** les éléments d'insertion (41) reproduisant les angles de la caisse à bouteilles sont déplacés redressés jusque dans les angles des mâchoires (21) d'outil.

3. Outil de fabrication d'une caisse à bouteilles en matière plastique au moyen d'un procédé selon la revendication 1 ou 2, comprenant un piston (20) d'outil mobile entouré de mâchoires (21) à l'état fermé, un appareil réceptacle pour soulever la feuille support publicitaire (5, 11, 12), un dispositif de transfert (30) expansible pour retenir temporairement des moyens publicitaires, dispositif qui présente des segments (32, 33, 34), et un robot (15) pour manier la feuille support publicitaire (5, 11, 12) et des caissons à bouteilles, sachant que sur le robot (15) est agencé un dispositif d'insertion (40) déplaçable entre les segments du dispositif de transfert (30) et présentant des éléments d'insertion (41) qui présentent des zones arrondies (43) reproduisant les contours extérieurs de colonnes d'angle (3) de la caisse à bouteilles, **caractérisé en ce que** les zones arrondies (43) sont déplaçables perpendiculairement à la direction de déplacement de l'élément d'insertion (41) respectif.

4. Outil selon la revendication 3, **caractérisé en ce que** les zones arrondies (43) sont réalisées en deux parties et qu'une partie est formée par une pièces de compression (431) déplaçable perpendiculairement à la direction de déplacement de l'élément d'insertion (41) respectif.

5. Outil selon la revendication 3 ou 4, **caractérisé en ce que** les segments (34) sont déplaçables.
